# EUROPEAN PATENT APPLICATION

(11) **EP 4 429 255 A1**
(43) Date of publication of application: **11.09.2024**
(21) Application number: 22903283.4
(22) Date of filing: 01.12.2022
(51) Int. Cl.: H04N 21/4363

(54) **SCREEN PROJECTION METHOD, SCREEN PROJECTION DEVICE, SCREEN PROJECTION DISPLAY DEVICE, SCREEN PROJECTION SYSTEM AND MEDIUM**

(30) Priority: 06.12.2021 CN 202111478547
(71) Applicant: BEIJING BYTEDANCE NETWORK TECHNOLOGY CO., LTD., Beijing 100041 (CN)
(72) Inventor: YU, Zhenhua, Beijing 100086 (CN); SHEN, Xianchao, Beijing 100086 (CN)
(74) Representative: Dentons UK and Middle East LLP
(86) International application number: PCT/CN2022/135750
(87) International publication number: WO 2023/103861

(57) **Abstract**

Disclosed in the present disclosure are a screen projection method, a screen projection device, a screen projection display device, a screen projection system and a medium. The method is applied to a screen projection device, and comprises: receiving a screen projection request, the screen projection request comprising an access address of a player page; generating a player page based on the access address, wherein a player is built in the player page, and the playback address associated with the player is an address of a media file in a preset format; and transmitting the media file in the preset format by means of a hypertext transfer protocol.

## Description

### CROSS-REFERENCE TO RELATED APPLICATION

The present application claims the priority to Chinese Patent Application No. 202111478547.9, filed on December 6, 2021, the entire disclosure of which is incorporated herein by reference as portion of the present application.

### TECHNICAL FIELD

Embodiments of the present disclosure relate to the technical field of screen projection, for example, to a screen projection method, a screen projection device, a screen projection display device, a screen projection system, and a medium.

### BACKGROUND

Due to the convenience demand of the mobile terminal, the screen size of the mobile terminal is correspondingly reduced, resulting in poor video viewing experience and inconvenient viewing of multiple users, and the corresponding demand of projecting the content on a small screen of the mobile terminal onto a large screen comes along.

When the content of the small screen is projected onto the large screen for display, the screen projection end and the screen projection display end need to support the same screen projection protocol so as to realize screen projection. However, the screen projection protocols are different from each other, and it is very difficult to install a screen projection protocol for each equipment.

The screen projection technology in the related art is a website or a fragment resource delivered via the webpage technology, but the screen projection technology has poor generality and a long screen projection delay.

### SUMMARY

The embodiments of the present disclosure provide a screen projection method, a screen projection device, a screen projection display device, a screen projection system, and a medium. The screen projection method has generality, and can reduce screen projection delay and improve screen projection efficiency.

In a first aspect, the embodiments of the present disclosure provide a screen projection method, which is applied to a screen projection device and includes:
receiving a screen projection request, in which the screen projection request includes an access address of a player page;
generating the player page based on the access address, in which a player is built in the player page, and a play address associated with the player is an address of a media file in a preset format;
and transmitting the media file in the preset format via a hypertext transfer protocol.

In a second aspect, the embodiments of the present disclosure further provide a screen projection method, which is applied to a screen projection display device and includes:
sending a screen projection request, in which the screen projection request includes an access address of a player page;
loading the player page according to the access address, in which a player is built in the player page, and a play address associated with the player is an address of a media file in a preset format;
pulling the media file in the preset format from the play address through the player page;
and playing the media file in the preset format.

In a third aspect, the embodiments of the present disclosure further provide a screen projection device, which includes a hypertext transfer protocol (HTTP) service unit, a player webpage unit, and a distribution unit;
the HTTP service unit is configured to receive a screen projection request, and the screen projection request includes an access address of a player page;
the player webpage unit is configured to generate the player page based on the access address, a player is built in the player page, and a play address associated with the player is an address of a media file in a preset format;
and the distribution unit is configured to transmit the media file in the preset format via a hypertext transfer protocol.

In a fourth aspect, the embodiments of the present disclosure further provide a screen projection display device, which includes a browser unit and a player unit;
the browser unit is configured to: send a screen projection request, in which the screen projection request includes an access address of a player page; load the player page according to the access address, in which a player is built in the player page, and a play address associated with the player is an address of a media file in a preset format; and pull the media file in the preset format from the play address associated with the player through the player page;
and the player unit is configured to play the media file in the preset format.

In a fifth aspect, the embodiments of the present disclosure further provide a screen projection system, which includes the screen projection device according to the third aspect, and at least one screen projection display device according to the fourth aspect.

In a sixth aspect, the embodiments of the present disclosure further provide a computer-readable storage medium storing a computer program, and the computer program, when executed by a processing device, implements the screen projection method according to the first aspect or the second aspect.

### BRIEF DESCRIPTION OF DRAWINGS

Throughout the drawings, the same or similar reference numerals indicate the same or similar elements. It should be understood that the drawings are schematic, and components and elements are not necessarily drawn to scale.
Fig. 1 is a schematic flow diagram of a screen projection method provided by the embodiments of the present disclosure;
Fig. 2 is a schematic flow diagram of another screen projection method provided by the embodiments of the present disclosure;
Fig. 3 is a schematic structural diagram of a screen projection device provided by the embodiments of the present disclosure;
Fig. 4 is a schematic structural diagram of another screen projection device provided by the embodiments of the present disclosure;
Fig. 5 is a schematic structural diagram of a screen projection display device provided by the embodiments of the present disclosure;
Fig. 6 is a schematic structural diagram of another screen projection display device provided by the embodiments of the present disclosure;
Fig. 7 is a schematic structural diagram of a screen projection system provided by the embodiments of the present disclosure; and
Fig. 8 is a schematic structural diagram of a terminal device provided by the embodiments of the present disclosure.

### DETAILED DESCRIPTION

It should be understood that the various steps described in the method embodiments of the present disclosure may be performed in different orders and/or in parallel. Furthermore, the method embodiments may include additional steps and/or omit performing the illustrated steps. The protection scope of the present disclosure is not limited in this aspect.

As used herein, the term "include," "comprise," and variations thereof are openended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," or the like mentioned in the present disclosure are illustrative rather than restrictive, and those skilled in the art should understand that unless the context clearly indicates otherwise, these modifications should be understood as "one or more."

The names of the messages or information exchanged between a plurality of apparatuses in the embodiments of the present disclosure are for illustrative purposes only and are not intended to limit the scope of these messages or information.

In the embodiments described below, optional features and examples are provided in each embodiment. Various features described in the embodiments may be combined to form multiple alternatives, and each embodiment should not be construed as one technical solution only. In addition, it should be noted that the embodiments and the features in the embodiments of the present disclosure may be combined with one another without conflicts.

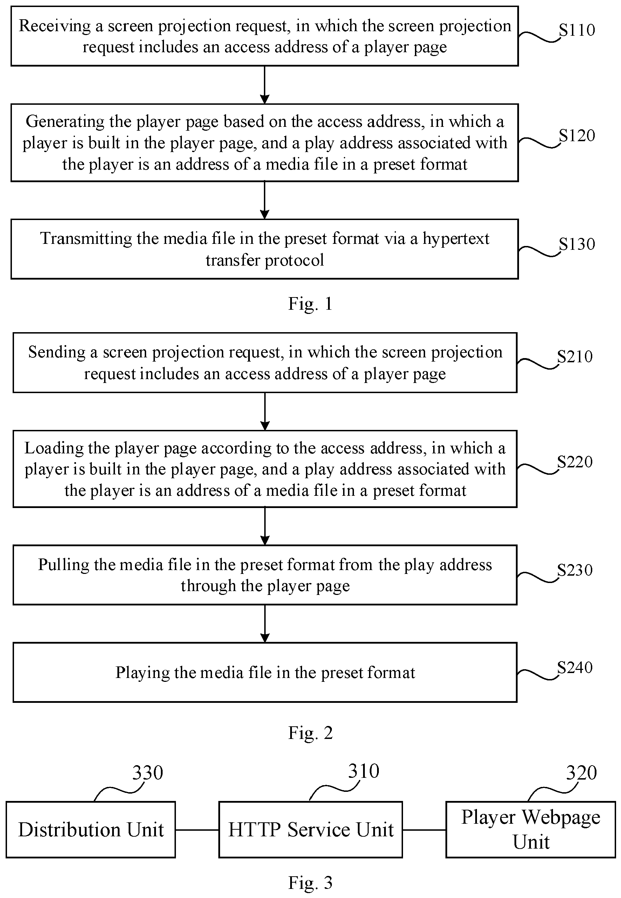

Fig. 1 is a schematic flow diagram of a screen projection method provided by the embodiments of the present disclosure. The method may be applied to the case where the content of one screen is projected onto another screen for display. The method may be executed by a screen projection device, where the device may be implemented by a software and/or hardware, and is generally integrated on a screen projection system. In the present embodiment, the screen projection system includes, but is not limited to, devices such as computers, mobile phones, personal digital assistants and computers.

It should be noted that the problem to be solved by the present embodiment is to efficiently project the content of one screen onto another screen for display, that is, projecting the content of a screen projection device onto a screen projection display device for display, where the content of the screen projection device may be audios and/or videos, etc. For example, the present embodiment may enable videos on a small screen (e.g., a mobile phone) to be projected on a large screen (e.g., a desktop computer) to enhance the user's video viewing experience.

As shown in Fig. 1, a screen projection method provided by the embodiments of the present disclosure includes the following steps.

S110: receiving a screen projection request, in which the screen projection request includes an access address of a player page.

The screen projection request may be considered to be a request of a screen projection display device requesting to project a media file of a screen projection device on the screen projection display device, and the screen projection request may include an access address of a player page. The player page may refer to an interface for playing the media file, and may be implemented based on the web technology, such as the Hyper Text Markup Language (HTML). The access address is an address for accessing the player page.

Exemplarily, the screen projection device may receive a screen projection request from the screen projection display device for encapsulation and transmission of subsequent media files.

S120: generating the player page based on the access address, in which a player is built in the player page, and a play address associated with the player is an address of a media file in a preset format.

The player may be built in the player page, for example, a html5 player. The play address associated with the player is an address of the media file in the preset format. The media file may be considered to be audio and video content to be projected on a screen, and the source of the media file is unlimited, for example, may be read from a local storage unit, downloaded from a network database, and also recorded or recorded on a screen according to a local display unit. The type of the preset format is not limited, and may be, for example, a Flash Video format, etc. The screen projection device may encapsulate a media file into a file in a preset format and store the file at a specific address, and the play address associated with the player is the address. On this basis, the screen projection display device may load the player therein by accessing the player page, and pull the media file from the address to play by the player. The present embodiment does not limit the method of encapsulation, and the media file may be encapsulated after the screen projection device receives the access request, or may be pre-encapsulated and stored.

Exemplarily, the screen projection device may generate a player page based on the access address and drive the transmission of the media file to the screen projection display device through the player page. This step does not limit the means of generating the player page. For example, the player page may be generated based on the built-in player of html5. On this basis, the screen projection device may record or screen record a media file, and then transmit the media file through the player page. During the process of recording or screen recording, in addition to the original audio and video content, bullet comments, special effects and interactive information added by a viewer in the process of playing may also be saved so as to provide the complete media file to the screen projection display device.

It should be noted that the present embodiment does not limit the order of the steps S110 and S120 as long as the contents of the steps are completed. For example, the step S110 may be performed before the step S120 is performed; or the step S120 may be performed before the step S110 is performed, in this case, the screen projection device generates a player page in advance, and after receiving an access request of the screen projection display device to the player page, the screen projection display device may be provided with the player page and the media file.

S130: transmitting the media file in the preset format via a hypertext transfer protocol.

After receiving the screen projection request, the screen projection device may transmit the media file in the preset format to the screen projection display device. For example, the screen projection device may transmit the media file in the preset format to the screen projection display device through the player page. It is also possible that the screen projection display device loads a player page based on the access address and pulls the media file in the preset format through the player in the player page.

In the present embodiment, the screen projection device may transmit the media file in the preset format to the screen projection display device via the HTTP. The screen projection display device includes at least one. Audio and video streams may be transmitted between the screen projection device and the screen projection display device via the HTTP. The HTTP is easy to implement and extend, and can provide universal support for the transmission between the screen projection device and the screen projection display device.

The embodiments of the present disclosure provide a screen projection method, which realizes the transmission and screen projection of the media file in the preset format through the player page and has generality. The player page can provide a complete media file, reducing the delay of screen projection and improving the screen projection efficiency.

An extended embodiment of the above-described embodiment is proposed on the basis of the above-described embodiment. It should be noted herein that only the differences from the above-described embodiment are described in the extended embodiment in order to simplify the description.

In an embodiment, before transmitting the media file in the preset format via the hypertext transfer protocol, the screen projection method further includes: reading or recording the media file; and encapsulating the media file into the preset format, where the preset format includes a Flash Video (FLV) format or a Transport Stream (TS) format.

Exemplarily, the media file in the preset format also needs to be acquired before the media file in the preset format is transmitted via the hypertext transfer protocol. For example, the media file may be first obtained from the screen projection device and then capsulated into the media file in the preset format.

In the present embodiment, the media file may be read from a local storage unit (such as a mobile phone memory card, a computer hard disk, etc.), and may also be obtained by recording or recording a screen of a local display unit (displaying contents on a screen). The preset format may include FLV or TS format. Among them, the files formed by the FLV format are very small and the loading speed is very fast, which effectively solves the problems that the exported files are bulky and cannot be well used on the network after the video files are imported into Flash. The feature of the TS format is that it can be decoded independently starting from any segment of a video stream. By transmitting the media files in the FLV or TS format using HTTP, the transmission efficiency can be improved, and the delay of screen projection can be reduced.

Alternatively, the media file may be encapsulated after the screen projection device receives the access request, or may be pre-encapsulated and stored.

In an embodiment, before the screen projection request is received, the screen projection method further includes broadcasting the address of the media file based on a Digital Living Network Alliance (DLNA) protocol or a Multicast Domain Name System (MDNS) protocol.

In the present embodiment, the screen projection device may broadcast the address of the media file to the screen projection display device in advance, so that the screen projection display device obtains the address of the media file. Exemplarily, the screen projection device may broadcast the address of the media file based on the DLNA protocol or the MDNS protocol. At the same time, the screen projection display device may obtain the address of the media file by a corresponding protocol. For example, when the address of the media file is broadcast, the media file may or may not have been encapsulated in the preset format. On this basis, the screen projection display device may discover a screen projection service by receiving the broadcast.

Fig. 2 is a schematic flow diagram of another screen projection method provided by the embodiments of the present disclosure. The method may be applied to the case where the content of one screen is projected onto another screen for display. The method may be executed by a screen projection display device, where the device may be implemented by a software and/or hardware, and is generally integrated on a screen projection system. In the present embodiment, the screen projection system includes, but is not limited to, devices such as computers, mobile phones, personal digital assistants and computers. Details of techniques not described in detail in the present embodiment may be referred to any of the embodiments described above.

As shown in Fig. 2, the embodiments of the present disclosure provide a screen projection method, including the following steps.

S210: sending a screen projection request, in which the screen projection request includes an access address of a player page.

In the present embodiment, the screen projection display device may send the screen projection request to a screen projection device so as to realize the loading of a subsequent player page and the pulling of a media file in a preset format. The manner of sending the screen projection request is not limited. For example, the screen projection request may be sent to the screen projection device via the hypertext transfer protocol.

S220: loading the player page according to the access address, in which a player is built in the player page, and a play address associated with the player is an address of a media file in a preset format.

S230: pulling the media file in the preset format from the play address through the player page.

S240: playing the media file in the preset format.

The screen projection display device may load the player page by accessing the access address of the player page. Because a player is built in the player page, and the play address associated with the player is an address of the media file in the preset format, the screen projection display device may automatically pull the media file in the preset format through the player page, and then play the media file in the preset format, thereby completing the display of the media file from the screen projection device on the screen projection display device.

Alternatively, the screen projection display device may receive a broadcast in a local area network via the DLNA or MDNS protocol, so as to find a media file to be screen-projected and obtain the access address of the player page. Then the access address of the player page is input, such as http://x.x.x.x/index.html, for access, via a browser in the screen projection display device, where x.x.x.x is an Internet protocol (IP) address of the screen projection device. At this moment, the screen projection display device can pull, load and execute the player page. Because a html5 player is built in the player page, the access address points to the media file in the preset format of the screen projection device, such as http://x.x.x.x/live.flv or http://x.x.x.x/live.ts. Then, the player page will automatically pull the media file in preset format from the screen display device. Finally, the screen display device may play the media file in preset format.

The embodiments of the present disclosure provide a screen projection method, which can pull and play a media file in a preset format by loading a player page according to an access address. The method has generality, and a complete media file may be pulled by the player page, thereby reducing the delay of screen projection and improving the screen projection efficiency.

In an embodiment, before the screen projection request is sent, the screen projection method further includes acquiring the address of the media file based on a DLNA protocol or a MDNS protocol.

In the present embodiment, before the screen projection request is sent, the screen projection display device may receive a broadcast based on the DLNA protocol or the MDNS protocol to acquire the address of the media file to discover the screen projection service.

Fig. 3 is a schematic structural diagram of a screen projection device provided by the embodiments of the present disclosure. The device may be applied to the case where the contents of one screen are projected onto another screen for display. The device may be implemented by a software and/or hardware and is generally integrated in a screen projection system.

As shown in Fig. 3, the device includes a HTTP service unit 310, a player webpage unit 320, and a distribution unit 330.

The HTTP service unit 310 is configured to receive a screen projection request, and the screen projection request includes an access address of a player page.

The player webpage unit 320 is configured to generate the player page based on the access address, a player is built in the player page, and a play address associated with the player is an address of a media file in a preset format.

The distribution unit 330 is configured to transmit the media file in the preset format via a hypertext transfer protocol.

The present embodiment provides a screen projection device, which realizes the transmission and screen projection of the media file in the preset format through the player page and has generality. In addition, the player page can provide a complete media file, thereby reducing the delay of screen projection and improving the screen projection efficiency.

On the basis of the above, the device further includes a media acquisition unit and an encapsulation unit.

The media acquisition unit is configured to read or record the media file.

The encapsulation unit is configured to encapsulate the media file into the preset format, and the preset format includes an FLV format or a TS format.

Alternatively, the media acquisition unit may include an audio acquisition unit and/or a video acquisition unit, each configured to acquire a different form of media file.

On the basis of the above, the device further includes a service broadcast unit configured to broadcast the address of the media file in the preset format to at least one screen projection display device based on the DLNA protocol or the MDNS protocol before receiving the screen projection request.

The above-mentioned screen projection device may execute the screen projection method provided by the embodiments of the present disclosure, and has functional modules corresponding to the execution method.

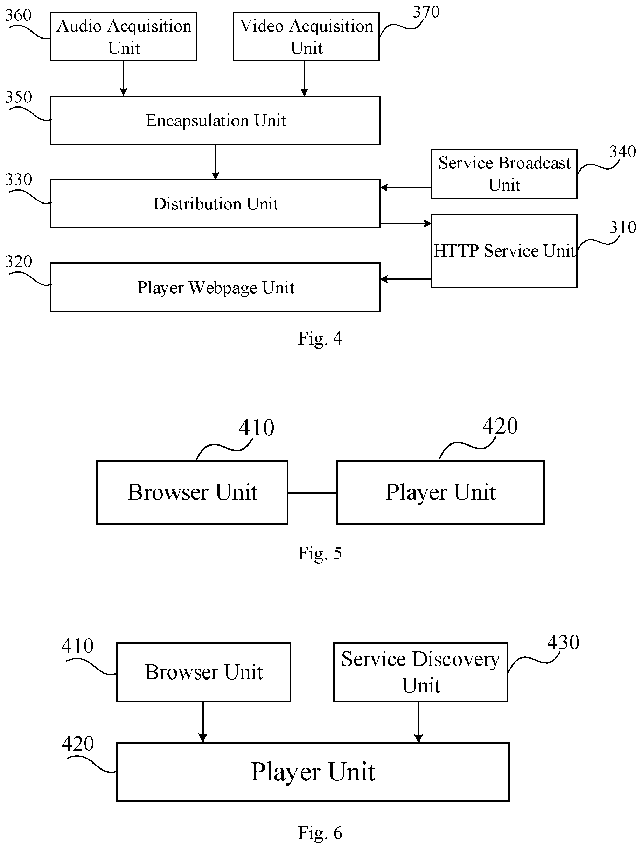

Fig. 4 is a schematic structural diagram of another screen projection device provided by the embodiments of the present disclosure. As shown in Fig. 4, the business flow in the screen projection device may be described as follows.

Firstly, the service broadcast unit 340 acquires an audio and video address, i.e., an address of a media file, from the distribution unit 330, and broadcasts using the DLNA or MDNS protocol. At this moment, the large-screen end (that is, a screen projection display device) may acquire an audio and video play address via a corresponding protocol.

Then, the HTTP service unit 310 provides the HTTP service, and the large-screen end accesses by a fixed address, such as http://x.x.x.x/index.html, so as to pull the player page provided by the player webpage unit 320, where x.x.x.x is the IP address of a small-screen end (that is, a screen projection device).

Then, the player page is loaded and executed by the large-screen browser. Because a html5 player is built in the page, and the play address thereof points to an internal resource of the small-screen end, such as http://x.x.x.x/live.flv or http://x.x.x.x/live.ts, the request (that is, a screen projection request) is sent to the HTTP service unit 310 of the small-screen end.

Subsequently, after receiving the request of live.flv, the HTTP service unit 310 requests the distribution unit 330 to send the encapsulated FLV or TS data stream to the large-screen end.

Then, after receiving the request of the HTTP service unit 310, the distribution unit 330 immediately starts the encapsulation unit 350, and pulls the encapsulated audio and video data therefrom and provides same to the large-screen end.

After the encapsulation unit 350 is started, the audio acquisition unit 360 and the video acquisition unit 370 may be started immediately, and the media files acquired by the both can be packaged into the preset format.

On this basis, the screen projection device may transmit a media file in a preset format with at least one screen projection display device via the HTTP. This process may be driven by a player page, thereby supporting the recording and transmission of the media file and improving the efficiency and flexibility of screen projection.

Fig. 5 is a schematic structural diagram of a screen projection display device provided by the embodiments of the present disclosure. The device may be applied to the case where the contents of one screen are projected onto another screen for display. The device may be implemented by a software and/or hardware and is generally integrated in a screen projection system.

As shown in Fig. 5, the device includes a browser unit 410 and a player unit 420.

The browser unit 410 is configured: send a screen projection request, in which the screen projection request includes an access address of a player page; load the player page according to the access address, in which a player is built in the player page, and a play address associated with the player is an address of a media file in a preset format; and pull the media file in the preset format from the play address associated with the player through the player page.

The player unit 420 is configured to play the media file in the preset format.

The present embodiment provides a screen projection device, which may load a player page by accessing an access address of the player page. Because a player is built in the player page, and the play address associated with the player is an address of the media file in the preset format, the screen projection display device may automatically pull the media file in the preset format by the player page, and then play the media file in the preset format, thereby completing the display of the media file of the screen projection device on the screen projection display device.

On the basis of the above, the device further includes a service discovery unit. The service discovery unit is configured to acquire the address of the media file in the preset format based on the DLNA protocol or the MDNS protocol.

The above-mentioned screen projection display device may execute the screen projection method provided by the embodiments of the present disclosure, and has functional modules corresponding to the execution method.

Fig. 6 is a schematic structural diagram of another screen projection display device provided by the embodiments of the present disclosure. As shown in Fig. 6, the business flow in the screen projection display device (that is, a large-screen end) may be described as follows.

Firstly, the service discovery unit 430 discovers a service (the audio and video content address is an address of a media file) in a local area network via the DLNA or MDNS protocol.

Then, an access address input by a user is acquired through the browser unit 410, for example, http://x.x.x.x/index.html, a screen projection device is accessed with this, and the player page is loaded from the screen projection device (that is, a small-screen end), where x.x.x.x is an IP address of the small-screen end.

Finally, the player page automatically pulls the audio and video stream from the small-screen end and calls the player unit 420 to play.

On this basis, the screen projection display device may discover a service and acquire a media file in a preset format from the screen projection device via the HTTP so as to realize screen projection. This process may be driven by a player page, thereby supporting the recording and screen projection of the media file and improving the efficiency and flexibility of screen projection.

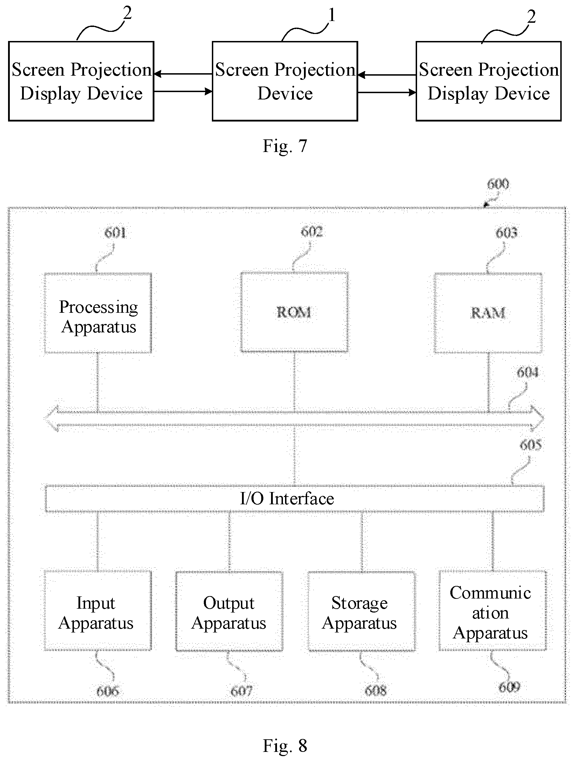

Fig. 7 is a schematic structural diagram of a screen projection system provided by the embodiments of the present disclosure. As shown in Fig. 7, the screen projection system includes a screen projection device 1, and at least one screen projection display device 2 (two screen projection display devices are exemplified in Fig. 7).

The screen projection device 1 is configured to execute the screen projection method applied to the screen projection device in any of the above-mentioned embodiments. The projection display device 2 is configured to execute the screen projection method applied to the screen projection display device in any of the above-mentioned embodiments.

The number of the screen projection display devices 2 may be at least one, that is, the screen projection device 1 may perform double-end interaction with at least one screen projection display device 2, and the media file in the screen projection device 1 may be projected to at least one screen projection display device 2 in the preset format. The interaction process between the screen projection device 1 and the screen projection display device 2 and the business process of screen projection may be referred to any of the above-mentioned embodiments.

The screen projection system of the present embodiment realizes the transmission and screen projection of the media file in the preset format through the player page and has generality, and the player page can provide a complete media file, thereby reducing the delay of screen projection and improving the screen projection efficiency.

Fig. 8 is a schematic structural diagram of a terminal device provided by the embodiments of the present disclosure. Fig. 8 shows a schematic structural diagram of a terminal device 600 suitable for implementing the embodiments of the present disclosure. The terminal devices 600 in the embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), and fixed terminals such as a digital TV, a desktop computer, or the like. The terminal device 600 illustrated in Fig. 8 is merely an example, and should not pose any limitation to the functions and the range of use of the embodiments of the present disclosure.

As illustrated in Fig. 8, the terminal device 600 may include a processing apparatus 601 (e.g., a central processing unit, a graphics processing unit, etc.), which can perform various suitable actions and processing according to a program stored in a read-only memory (ROM) 602 or a program loaded from a storage apparatus 608 into a random-access memory (RAM) 603. At least one processing apparatus implements the method provided by the present disclosure. The RAM 603 further stores various programs and data required for operations of the terminal device 600. The processing apparatus 601, the ROM 602, and the RAM 603 are interconnected through a bus 604. An input/output (I/O) interface 605 is also connected to the bus 604.

Usually, the following apparatuses may be connected to the I/O interface 605: an input apparatus 606 including, for example, a touch screen, a touch pad, a keyboard, a mouse, a camera, a microphone, an accelerometer, a gyroscope, or the like; an output apparatus 607 including, for example, a liquid crystal display (LCD), a loudspeaker, a vibrator, or the like; a storage apparatus 608 including, for example, a magnetic tape, a hard disk, or the like, in which the storage apparatus 608 is configured to store at least one program; and a communication apparatus 609. The communication apparatus 609 may allow the terminal device 600 to be in wireless or wired communication with other devices to exchange data. While Fig. 8 illustrates the terminal device 600 having various apparatuses, it should be understood that not all of the illustrated apparatuses are necessarily implemented or included. More or fewer apparatuses may be implemented or included alternatively.

Particularly, according to the embodiments of the present disclosure, the processes described above with reference to the flowcharts may be implemented as a computer software program. For example, the embodiments of the present disclosure include a computer program product, which includes a computer program carried by a computer-readable medium. The computer program includes program code for performing the methods shown in the flowcharts. In such embodiments, the computer program may be downloaded online through the communication apparatus 609 and installed, or may be installed from the storage apparatus 608, or may be installed from the ROM 602. When the computer program is executed by the processing apparatus 601, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned terminal device 600, or may also exist alone without being assembled into the terminal device 600.

The above-mentioned computer-readable medium carries one or more programs, and when the one or more programs are executed by the terminal device, the terminal device 600 is caused to: receive a screen projection request, in which the screen projection request includes an access address of a player page; generate the player page based on the access address, in which a player is built in the player page, and a play address associated with the player is an address of a media file in a preset format; and transmit the media file in the preset format via a hypertext transfer protocol. Alternatively, the above-mentioned computer-readable medium carries at least one program, which, when executed by the terminal device 600, enables the terminal device 600 to: send a screen projection request, in which the screen projection request includes an access address of a player page; load the player page according to the access address, in which a player is built in the player page, and a play address associated with the player is an address of a media file in a preset format; pull the media file in the preset format from the play address through the player page; and play the media file in the preset format.

The computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, function, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

According to at least one embodiment of the present disclosure, example 1 provides a screen projection method, which is applied to a screen projection device and includes:
receiving a screen projection request, in which the screen projection request includes an access address of a player page;
generating the player page based on the access address, in which a player is built in the player page, and a play address associated with the player is an address of a media file in a preset format;
and transmitting the media file in the preset format via a hypertext transfer protocol.

Example 2 according to example 1, before transmitting the media file in the preset format via the hypertext transfer protocol, further includes:
reading or recording the media file;
and encapsulating the media file into the preset format, in which the preset format includes a FLV format or a TS format.

Example 3 according to example 1, before the receiving the screen projection request, further includes:
broadcasting the address of the media file based on a DLNA protocol or a MDNS protocol.

According to at least one embodiment of the present disclosure, example 4 provides a screen projection method, which is applied to a screen projection display device and includes:
sending a screen projection request, in which the screen projection request includes an access address of a player page;
loading the player page according to the access address, in which a player is built in the player page, and a play address associated with the player is an address of a media file in a preset format;
pulling the media file in the preset format from the play address through the player page;
and playing the media file in the preset format.

Example 5 according to example 4, before sending the screen projection request, further includes:
acquiring the address of the media file based on a DLNA protocol or a MDNS protocol.

According to at least one embodiment of the present disclosure, example 6 provides a screen projection device, which includes a HTTP service unit, a player webpage unit, and a distribution unit;
the HTTP service unit is configured to receive a screen projection request, and the screen projection request includes an access address of a player page;
the player webpage unit is configured to generate the player page based on the access address, a player is built in the player page, and a play address associated with the player is an address of a media file in a preset format;
and the distribution unit is configured to transmit the media file in the preset format via a hypertext transfer protocol.

Example 7 according to example 6, further includes a media acquisition unit and an encapsulation unit;
the media acquisition unit is configured to read or record the media file;
and the encapsulation unit is configured to encapsulate the media file into the preset format, and the preset format includes a FLV format or a TS format.

Example 8 according to example 6, further includes a service broadcast unit;
the service broadcast unit is configured to broadcast the address of the media file in the preset format to at least one screen projection display device based on a DLNA protocol or a MDNS protocol before receiving the screen projection request.

According to at least one embodiment of the present disclosure, example 9 provides a screen projection display device, which includes a browser unit and a player unit;
the browser unit is configured to: send a screen projection request, in which the screen projection request includes an access address of a player page; load the player page according to the access address, in which a player is built in the player page, and a play address associated with the player is an address of a media file in a preset format; and pull the media file in the preset format from the play address associated with the player through the player page;
and the player unit is configured to play the media file in the preset format.

Example 10 according to example 9, further includes a service discovery unit;
and the service discovery unit is configured to acquire the address of the media file in the preset format based on a DLNA protocol or a MDNS protocol.

According to at least one embodiment of the present disclosure, example 11 provides a screen projection system, which includes the screen projection device according to example 6, and at least one screen projection display device according to example 9.

According to at least one embodiment of the present disclosure, example 12 provides a computer-readable storage medium, which stores a computer program, and the computer program, when executed by a processing device, implements the screen projection method according to any one of examples 1-5.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable subcombinations.

## Claims

1. A screen projection method, applied to a screen projection device, comprising:
receiving a screen projection request, wherein the screen projection request comprises an access address of a player page;
generating the player page based on the access address, wherein a player is built in the player page, and a play address associated with the player is an address of a media file in a preset format; and
transmitting the media file in the preset format via a hypertext transfer protocol.

2. The method according to claim 1, before the transmitting the media file in the preset format via the hypertext transfer protocol, further comprising:
reading or recording the media file; and
encapsulating the media file into the preset format, wherein the preset format comprises a Flash Video (FLV) format or a Transport Stream (TS) format.

3. The method according to claim 1, before the receiving the screen projection request, further comprising:
broadcasting the address of the media file based on a Digital Living Network Alliance (DLNA) protocol or a Multicast Domain Name System (MDNS) protocol.

4. A screen projection method, applied to a screen projection display device, comprising:
sending a screen projection request, wherein the screen projection request comprises an access address of a player page;
loading the player page according to the access address, wherein a player is built in the player page, and a play address associated with the player is an address of a media file in a preset format;
pulling the media file in the preset format from the play address through the player page; and
playing the media file in the preset format.

5. The method according to claim 4, before the sending the screen projection request, further comprising:
acquiring the address of the media file based on a Digital Living Network Alliance (DLNA) protocol or a Multicast Domain Name System (MDNS) protocol.

6. A screen projection device, comprising a hypertext transfer protocol (HTTP) service unit, a player webpage unit, and a distribution unit,
wherein the HTTP service unit is configured to receive a screen projection request, wherein the screen projection request comprises an access address of a player page;
the player webpage unit is configured to generate the player page based on the access address, wherein a player is built in the player page, and a play address associated with the player is an address of a media file in a preset format; and
the distribution unit is configured to transmit the media file in the preset format via a hypertext transfer protocol.

7. The device according to claim 6, further comprising a media acquisition unit and an encapsulation unit,
wherein the media acquisition unit is configured to read or record the media file; and
the encapsulation unit is configured to encapsulate the media file into the preset format, wherein the preset format comprises a Flash Video (FLV) format or a Transport Stream (TS) format.

8. The device according to claim 6, further comprising a service broadcast unit,
wherein the service broadcast unit is configured to broadcast the address of the media file in the preset format to at least one screen projection display device based on a Digital Living Network Alliance (DLNA) protocol or a Multicast Domain Name System (MDNS) protocol before receiving the screen projection request.

9. A screen projection display device, comprising a browser unit and a player unit,
wherein the browser unit is configured to: send a screen projection request, wherein the screen projection request comprises an access address of a player page; load the player page according to the access address, wherein a player is built in the player page, and a play address associated with the player is an address of a media file in a preset format; and pull the media file in the preset format from the play address associated with the player through the player page; and
the player unit is configured to play the media file in the preset format.

10. The device according to claim 9, further comprising a service discovery unit;
wherein the service discovery unit is configured to acquire the address of the media file in the preset format based on a Digital Living Network Alliance (DLNA) protocol or a Multicast Domain Name System (MDNS) protocol.

11. A screen projection system, comprising the screen projection device according to claim 6, and at least one screen projection display device according to claim 9.

12. A computer-readable storage medium, storing a computer program, wherein the computer program, when executed by a processing device, implements the screen projection method according to any one of claims 1-5.
